# EUROPÄISCHE PATENTANMELDUNG

(11) **EP 4 527 783 A1**
(43) Veröffentlichungstag der Anmeldung: **26.03.2025**
(21) Anmeldenummer: 24200267.3
(22) Anmeldetag: 13.09.2024
(51) Int. Cl.: B67C 3/00, B67C 3/28, F15B 19/00, F16K 37/00

(54) **FUNKTIONSFÄHIGKEITSERMITTLUNG EINES REGELVENTILS EINER VORRICHTUNG ZUM FÜLLEN VON BEHÄLTERN**

(30) Priorität: 15.09.2023 DE 102023125021
(71) Anmelder: KRONES AG, 93073 Neutraubling (DE)
(72) Erfinder: MARQUARDT, Christoph, 93073 Neutraubling (DE); ZIEGLER, Manfred, 93073 Neutraubling (DE); SCHMIDTMEYER, Heiko, 93073 Neutraubling (DE); DU BELLIER, Thomas, 93073 Neutraubling (DE); KAMPMANN, Lutz, 93073 Neutraubling (DE)
(74) Vertreter: v. Bezold & Partner Patentanwälte - PartG mbB

(57) **Zusammenfassung**

Die Erfindung betrifft u.a. eine Vorrichtung (10) zum Füllen von Behältern (12) mit einem Füllgut. Die Vorrichtung (10) weist ein Regelventil (36, 44, 52) für das Füllgut und eine Diagnoseeinrichtung (56) auf. Die Diagnoseeinrichtung (56) ist dazu konfiguriert, einen Stellwert einer Stellgröße des Regelventils (36, 44, 52) während des Regelns zu überwachen und einen Funktionsfähigkeitszustand des Regelventils (36, 44, 52) in Abhängigkeit von dem überwachten Stellwert zu ermitteln. Vorteilhaft kann die Vorrichtung (10) ermöglichen, dass im Betrieb eine Funktionsfähigkeit und damit ein Verschleiß des Regelventils (36, 44, 52) überwacht und erkannt werden kann.

## Beschreibung

### Technisches Gebiet

Die Erfindung betrifft eine Vorrichtung zum Füllen von Behältern mit einem Füllgut, wobei die Vorrichtung ein Regelventil aufweist. Die Erfindung betrifft ferner ein Verfahren zur Funktionsfähigkeitsermittlung eines Regelventils einer Vorrichtung zum Füllen von Behältern mit einem Füllgut.

### Technischer Hintergrund

Vorrichtungen zum Füllen von Behältern, wie beispielsweise ein Rundläufer-Füller, können an verschiedenen Stellen Regelventile einsetzen. Beispielsweise kann an einem Füllguteinlauf zu einem Füllgutkessel des Füllers ein Regelventil angeordnet sein, um einen Füllstand im Füllgutkessel auf einen konstanten Wert zu regeln. Auch in den Füllstationen des Füllers können Regelventile integriert sein, um einen Durchfluss des Füllguts beim Befüllen der Behälter zu regeln.

Regelventile können während ihrer Lebensdauer zunehmend verschleißen. Beispielsweise kann die Dichtfläche zwischen Ventilsitz und Ventilglied mit der Zeit verschleißen, eine dichtende Elastomereinlage kann mit der Zeit verschleißen oder ein Aktor des Regelventils kann mit der Zeit verschleißen. Ist der Verschleiß fortgeschritten, kann es zu einem plötzlichen Ausfall (Undichtigkeit) des Regelventils kommen.

Herkömmlich können Regelventile in bestimmten Zeitabschnitten gewartet, überholt oder ausgetauscht werden, z. B. nach 6000 Betriebsstunden oder 1x pro Jahr. Nachteilig an dieser Technik kann sein, dass während des Betriebs keine belastbaren Aussagen bezüglich der Haltbarkeit oder des Verschleißes der Regelventile getroffen werden können. Das Wartungsintervall kann beispielsweise zu lang oder zu kurz gewählt sein. Es können nur grobe Angaben über Standzeiten gemacht werden, weil die äußeren Einflüsse (Chemie, Temperatur, Fertigungsgenauigkeiten, Materialschwankungen etc.) eine starke Streuung verursachen können.

Der Erfindung liegt die Aufgabe zu Grunde, eine verbesserte Funktionsüberwachung eines Regelventils einer Vorrichtung zum Füllen von Behältern zu schaffen.

### Zusammenfassung der Erfindung

Die Aufgabe wird gelöst durch die Merkmale der unabhängigen Ansprüche. Vorteilhafte Weiterbildungen sind in den abhängigen Ansprüchen und der Beschreibung angegeben.

Ein Aspekt der vorliegenden Offenbarung betrifft eine Vorrichtung zum Füllen von Behältern mit einem Füllgut. Die Vorrichtung weist (mindestens) ein Regelventil für das Füllgut auf (z. B. ausgebildet und angeordnet zum Regeln eines Durchflusses des Füllguts oder zum Regeln eines Füllstands oder eines Drucks in einem Füllgutkessel der Vorrichtung). Die Vorrichtung weist eine Diagnoseeinrichtung auf, die dazu konfiguriert ist, einen Stellwert einer Stellgröße, vorzugsweise eines Ventilhubs (z. B. dimensionslos, in Prozent oder mit einer Längeneinheit o. Ä. angegeben) oder einer Ventilöffnung (z. B. dimensionslos, in Prozent oder mit einer Längen- oder Flächeneinheit o. Ä. angegeben), des (z. B. jeweiligen) Regelventils während des Regelns (z. B. des Durchflusses oder des Füllstands oder des Drucks) zu überwachen. Die Diagnoseeinrichtung ist ferner dazu konfiguriert, einen (z. B. normalen und/oder beeinträchtigten) Funktionsfähigkeitszustand, vorzugsweise Verschleißzustand, des (z. B. jeweiligen) Regelventils in Abhängigkeit von dem überwachten Stellwert zu ermitteln.

Vorteilhaft kann die Vorrichtung ermöglichen, dass im Betrieb der Vorrichtung und während des Regelns mittels des Regelventils eine Funktionsfähigkeit und damit ein Verschleiß des Regelventils überwacht und ermittelt werden kann. Bei der Überwachung des Stellwerts können beispielsweise Anomalien usw. erkannt werden, aus denen der Funktionsfähigkeitszustand des Regelventils abgeleitet werden kann. Damit kann bspw. regelventilindividuell erkannt werden, wann ein Austausch oder eine Wartung notwendig ist. Diese Ermittlung kann zudem vorrauschauend erfolgen, sodass nicht erst bei einer vollständigen Fehlfunktion des Regelventils reagiert wird, sondern bereits, wenn ein Ausfall des Regelventils droht. Die Wartung usw. kann somit präventiv eingeplant werden. Ein unnötiger, verfrühter Austausch könnte somit vermieden werden. Die Überwachung usw. kann automatisch und ohne Ausbau und Demontage erfolgen, sogar während der Produktion. Außerdem kann auf diese Weise jedes Regelventil der Vorrichtung einzeln überwacht werden, was eine deutliche Verbesserung gegenüber einer herkömmlichen stichprobenartigen Demontage und Prüfung ist. Auch könnte beispielsweise sofort erkannt und reagiert werden, wenn sich eine Schubstange des Regelventils lösen würde.

Beispielsweise kann die Diagnoseeinrichtung ferner dazu konfiguriert sein, den Stellwert von einem Signalausgang des Regelventils oder einem Regler / einer Regeleinrichtung, der/die dem Regelventil zugeordnet ist, zu empfangen.

Vorzugsweise kann eine Regelgröße für das Regeln ein erfasster Durchfluss durch das Regelventil oder ein erfasster Füllstand in einem Füllgutkessel der Vorrichtung oder ein erfasster Druck in einem Füllgutkessel der Vorrichtung sein.

Vorzugsweise kann eine Führungsgröße für das Regeln ein gewünschter Durchfluss durch das Regelventil oder ein gewünschter Füllstand in einem Füllgutkessel der Vorrichtung oder ein gewünschter Druck in einem Füllgutkessel der Vorrichtung sein.

In einem Ausführungsbeispiel ist die Diagnoseeinrichtung ferner dazu konfiguriert, den Funktionsfähigkeitszustand des Regelventils ferner in Abhängigkeit von einem zulässigen Stellwertbereich (z. B. vorgegeben mittels einer Benutzerschnittstelle der Vorrichtung) zu ermitteln, wobei vorzugsweise der Funktionsfähigkeitszustand des Regelventils als ein beeinträchtigter Funktionsfähigkeitszustand ermittelt wird, wenn der überwachte Stellwert außerhalb des zulässigen Stellwertbereichs ist, und/oder als ein normaler Funktionsfähigkeitszustand ermittelt wird, wenn der überwachte Stellwert innerhalb des zulässigen Stellwertbereichs ist. Vorteilhaft kann damit auf einfache Weise eine Anomalie im Betrieb des Regelventils erkannt werden, z. B. wenn der Stellwert stärker schwankt als normal oder in einem anderen Bereich schwankt als normal.

Bevorzugt kann der beeinträchtigte Funktionsfähigkeitszustand angeben, dass das Regelventil zwar noch funktioniert, aber absehbar ein Ausfall (z. B. aufgrund von Verschleiß) zu erwarten ist.

Vorzugsweise kann der beeinträchtigte Funktionsfähigkeitszustand einen zu erwartenden Ausfall des Regelventils angeben.

In einem weiteren Ausführungsbeispiel liegt der zulässige Stellwertbereich in einem Bereich ≥ 50 %, ≥ 55 % oder ≥ 60 % und/oder ≤ 75 %, ≤ 70 % oder ≤ 65 % eines Maximalwerts der Stellgröße. Vorteilhaft ist das Regelventil somit so konstruiert, dass im Normalbetrieb und ohne Auftreten einer Anomalie eine genügend große Gangreserve für eine reaktionsschnelle Regelung vorhanden ist.

In einer Ausführungsform ist der zulässige Stellwertbereich vorgegeben in Abhängigkeit von mindestens einem von
- eine Leistung (z. B. Behälteroutput pro Zeiteinheit) der Vorrichtung;
- ein Format und/oder ein Füllvolumen der Behälter;
- ein Füllstand in einem Füllgutkessel der Vorrichtung;
- ein Druck in einem Füllgutkessel der Vorrichtung;
- ein Vordruck des Füllguts stromaufwärts von einem Füllgutkessel der Vorrichtung; und
- eine Temperatur des Füllguts.

Vorteilhaft können somit für unterschiedliche Betriebsparameter und Betriebsbedingungen unterschiedliche zulässige Stellwertbereiche vorgegeben sein, z. B. ein erster zulässiger Stellwertbereich für eine erste Leistung der Vorrichtung und ein zweiter, niedrigerer zulässiger Stellwertbereich für eine zweite, kleinere Leistung der Vorrichtung.

In einer weiteren Ausführungsform ist die Diagnoseeinrichtung ferner dazu konfiguriert, den Stellwert des Regelventils während des Regelns derart zu überwachen, dass der Stellwert in einem vorgegebenen Zeitfenster und/oder in einem eingeschwungenen Zustand (des Stellwerts) überwacht wird. Vorzugsweise kann die Diagnoseeinrichtung ferner dazu konfiguriert sein, den Funktionsfähigkeitszustand des Regelventils derart in Abhängigkeit von dem überwachten Stellwert zu ermitteln, dass der Funktionsfähigkeitszustand des Regelventils in Abhängigkeit von (z. B. nur) dem in dem vorgegebenen Zeitfenster und/oder in dem eingeschwungenen Zustand überwachten Stellwert ermittelt wird. Vorteilhaft kann damit erreicht werden, dass die Anomalieerkennung dann durchgeführt wird, wenn die Anomalie sich besonders signifikant zeigen kann, nämlich vorzugsweise, wenn der Stellwert eingeschwungen ist.

In einer Ausführungsvariante kann das vorgegebene Zeitfenster:
- nach einer (z. B. Behälterfüll-) Startphase der Vorrichtung beginnen; und/oder
- frühestens 1 min, frühestens 2 min oder frühestens 3 min nach einem (z. B. Behälterfüll-) Start der Vorrichtung beginnen; und/oder
- vor einer (z. B. Behälterfüll-) Stoppphase der Vorrichtung enden; und/oder
- spätestens 3 min, spätestens 2 min oder spätestens 1 min vor einem (z. B. Behälterfüll-) Stopp der Vorrichtung enden; und/oder
- vor einer Leistungsänderung der Vorrichtung enden und/oder nach einer Leistungsänderung der Vorrichtung beginnen.

In einer weiteren Ausführungsvariante ist die Diagnoseeinrichtung ferner dazu konfiguriert, den Stellwert des Regelventils während des Regelns derart zu überwachen, dass der Stellwert bei im Wesentlichen konstanten Betriebsbedingungen der Vorrichtung überwacht wird. Vorzugsweise kann die Diagnoseeinrichtung ferner dazu konfiguriert sein, den Funktionsfähigkeitszustand des Regelventils derart in Abhängigkeit von dem überwachten Stellwert zu ermitteln, dass der Funktionsfähigkeitszustand abhängig von (z. B. nur) dem bei den im Wesentlichen konstanten Betriebsbedingungen überwachten Stellwert ermittelt wird. Vorteilhaft kann damit erreicht werden, dass die Anomalieerkennung dann durchgeführt wird, wenn die Anomalie sich besonders signifikant zeigen kann, nämlich, wenn sonst alle wesentlichen Parameter der Vorrichtung im Wesentlichen gleichbleiben.

In einem Ausführungsbeispiel ist die Diagnoseeinrichtung ferner dazu konfiguriert, zu ermitteln, dass im Wesentlichen konstante Betriebsbedingungen vorliegen, wenn mindestens eines erfüllt ist von:
- eine Leistung der Vorrichtung ist in einem vorgegebenen Leistungsbereich;
- eine Behältersperreinrichtung der Vorrichtung ist offen;
- ein Füllstand in einem Füllgutkessel der Vorrichtung ist innerhalb eines vorgegebenen Füllstandbereichs;
- ein Druck in einem Füllgutkessel der Vorrichtung ist innerhalb eines vorgegebenen Druckbereichs;
- ein Ventil eines Scherbenentfernungssystems der Vorrichtung ist geschlossen;
- ein Vordruck des Füllguts beim Zuführen zu einem Füllgutkessel der Vorrichtung ist innerhalb eines vorgegebenen Vordruckbereichs; und/oder
- eine Temperatur des Füllguts ist innerhalb eines vorgegebenen Temperaturbereichs.

In einem Ausführungsbeispiel weist die Vorrichtung eine Durchflusserfassungseinrichtung, die zum Erfassen eines Füllgutdurchflusses durch das Regelventil angeordnet ist, auf. Vorzugsweise kann die Diagnoseeinrichtung ferner dazu konfiguriert sein, den Funktionsfähigkeitszustand des Regelventils ferner in Abhängigkeit von einem von der Durchflusserfassungseinrichtung erfassten Füllgutdurchfluss zu ermitteln, vorzugsweise durch einen Vergleich zwischen dem erfassten Füllgutdurchfluss und einem theoretischen Füllgutdurchfluss durch das Regelventil, der in Abhängigkeit von dem überwachten Stellwert ermittelt wird. Vorteilhaft kann damit auf einfache Weise erkannt werden, wenn der tatsächliche (erfasste) Durchfluss sich stark von dem theoretischen Durchfluss unterscheidet, was durch einen fortgeschrittenen Verschleiß des Regelventils bedingt sein kann.

Vorzugsweise kann die Diagnoseeinrichtung ferner dazu konfiguriert sein, den Funktionsfähigkeitszustand:
- als einen beeinträchtigten Funktionsfähigkeitszustand zu ermitteln, wenn eine Abweichung zwischen dem erfassten Füllgutdurchfluss und dem theoretischen Füllgutdurchfluss größer als ein Grenzwert ist; und/oder
- als einen normalen Funktionsfähigkeitszustand zu ermitteln, wenn eine Abweichung zwischen dem erfassten Füllgutdurchfluss und dem theoretischen Füllgutdurchfluss kleiner als ein bzw. der Grenzwert ist.

In einem weiteren Ausführungsbeispiel weist die Vorrichtung ferner eine (z. B. visuelle, akustische und/oder haptische) Ausgabeeinrichtung zum Ausgeben einer Information an einen Benutzer auf. Vorzugsweise kann die Diagnoseeinrichtung ferner dazu konfiguriert sein, die Ausgabeeinrichtung zum Ausgeben einer Information bezüglich des ermittelten Funktionsfähigkeitszustands zu betreiben. Vorteilhaft können auf diese Weise Hinweise und Warnungen bezüglich der Funktionsfähigkeit des Regelventils ausgegeben werden und/oder aufgefordert werden, das Regelventil bei nächster Gelegenheit auszutauschen.

Ein weiterer Aspekt der vorliegenden Offenbarung betrifft ein Verfahren zur Funktionsfähigkeitsermittlung eines Regelventils einer Vorrichtung, vorzugsweise wie hierin offenbart, zum Füllen von Behältern mit einem Füllgut. Das Verfahren weist ein Regeln (z. B. eines Durchflusses des Füllguts oder eines Füllstands in einem Füllgutkessel der Vorrichtung oder eines Drucks in einem Füllgutkessel der Vorrichtung) mittels des Regelventils auf. Das Verfahren weist ein Überwachen eines Stellwerts einer Stellgröße, vorzugsweise eines Ventilhubs oder einer Ventilöffnung, des Regelventils mittels einer Diagnoseeinrichtung während des Regelns auf. Das Verfahren weist ein Ermitteln eines Funktionsfähigkeitszustands des Regelventils in Abhängigkeit von dem überwachten Stellwert mittels der Diagnoseeinrichtung auf. Optional kann das Verfahren ferner ein Ausgeben des ermittelten Funktionsfähigkeitszustands an einen Benutzer mittels einer Ausgabeeinrichtung aufweisen. Vorteilhaft lassen sich mit dem Verfahren die gleichen Vorteile erzielen, die hierin bereits unter Bezugnahme auf die Vorrichtung beschrieben sind. Selbiges gilt für die nachfolgenden, bevorzugten Ausführungsbeispiele des Verfahrens.

In einem Ausführungsbeispiel ist das Ermitteln des Funktionsfähigkeitszustands des Regelventils ferner abhängig von einem zulässigen Stellwertbereich (z. B. vorgegeben mittels einer Benutzerschnittstelle der Vorrichtung). Vorzugsweise kann der Funktionsfähigkeitszustand des Regelventils als ein beeinträchtigter Funktionsfähigkeitszustand ermittelt werden, wenn der überwachte Stellwert außerhalb des zulässigen Stellwertbereichs ist. Alternativ oder zusätzlich kann der Funktionsfähigkeitszustand des Regelventils als ein normaler Funktionsfähigkeitszustand ermittelt werden, wenn der überwachte Stellwert innerhalb des zulässigen Stellwertbereichs ist.

Vorzugsweise kann der zulässige Stellgrößenbereich (z. B. vor oder bei Inbetriebnahme der Vorrichtung) empirisch und/oder simulativ ermittelt werden, vorzugsweise für unterschiedliche Leistungen der Vorrichtung, unterschiedliche Füllstände eines Füllgutkessels der Vorrichtung, unterschiedliche Drücke eines Füllgutkessels der Vorrichtung, unterschiedliche Vordrücke des Füllguts beim Zuführen zu einem Füllgutkessel der Vorrichtung und/oder unterschiedliche Temperaturen des Füllguts.

In einem weiteren Ausführungsbeispiel erfolgt das Überwachen des Stellwerts in einem vorgegebenen Zeitfenster, in einem eingeschwungenen Zustand (des Stellwerts) und/oder bei im Wesentlichen konstanten Betriebsbedingungen der Vorrichtung. Vorzugsweise kann das Ermitteln des Funktionsfähigkeitszustands des Regelventils in Abhängigkeit von (z. B. nur) dem in dem vorgegebenen Zeitfenster, in dem eingeschwungenen Zustand und/oder bei den im Wesentlichen konstanten Betriebsbedingungen überwachten Stellwert erfolgen.

In einem weiteren Ausführungsbeispiel weist das Verfahren ferner ein Erfassen eines Füllgutdurchflusses durch das Regelventil mittels einer Durchflusserfassungseinrichtung auf. Vorzugweise kann das Ermitteln des Funktionsfähigkeitszustands des Regelventils ferner in Abhängigkeit von dem erfassten Füllgutdurchfluss erfolgen, bevorzugt durch einen Vergleich zwischen dem erfassten Füllgutdurchfluss und einem theoretischen Füllgutdurchfluss durch das Regelventil, wobei der theoretische Füllgutdurchfluss in Abhängigkeit von dem überwachten Stellwert ermittelt wird.

Vorzugsweise kann ein beeinträchtigter Funktionsfähigkeitszustand ermittelt werden, wenn eine Abweichung zwischen dem erfassten Füllgutdurchfluss und dem theoretischen Füllgutdurchfluss größer als ein Grenzwert ist. Alternativ oder zusätzlich kann ein normaler Funktionsfähigkeitszustand ermittelt werden, wenn eine Abweichung zwischen dem erfassten Füllgutdurchfluss und dem theoretischen Füllgutdurchfluss kleiner als ein bzw. der Grenzwert ist.

In einem weiteren Ausführungsbeispiel weist die Vorrichtung einen, vorzugsweise ringförmigen, Füllgutkessel auf, und das Regelventil ist (füllgut-) stromaufwärts von dem Füllgutkessel zum Regeln eines Füllstands oder eines Drucks in dem Füllgutkessel angeordnet. Alternativ kann das Regelventil beispielsweise ein Füllventil, mit dem das Füllgut zu einem Behälter zum Füllen des Behälters abgebbar ist, zum Regeln des Durchflusses des Füllguts sein. Alternativ kann das Regelventil mit einem Füllventil, mit dem das Füllgut zu einem Behälter zum Füllen des Behälters abgebbar ist, zum Regeln des Durchflusses des Füllguts verbunden sein.

In einem weiteren Ausführungsbeispiel weist die Vorrichtung mindestens eine Füllstation zum Füllen der Behälter auf, und das Regelventil ist in der mindestens einen Füllstation umfasst oder mit der mindestens einen Füllstation verbunden. Alternativ oder zusätzlich weist die Vorrichtung einen Rundläufer-Füller auf, der das Regelventil aufweist.

Ein weiterer Aspekt der vorliegenden Offenbarung betrifft eine Behälterbehandlungsanlage zum Herstellen, Reinigen, Beschichten, Prüfen, Abfüllen, Verschließen, Etikettieren, Bedrucken und/oder Verpacken von Behältern für flüssige Medien, vorzugsweise Getränke oder flüssige Nahrungsmittel. Die Behälterbehandlungsanlage kann die Vorrichtung wie hierin offenbart aufweisen.

Beispielsweise können die Behälter als Flaschen, Dosen, Kanister, Kartons, Flakons usw. ausgeführt sein.

Vorzugsweise kann sich der Begriff "Diagnoseeinrichtung" auf eine Elektronik (z. B. ausgeführt als eine Treiberschaltung oder mit Mikroprozessor(en) und Datenspeicher) beziehen, die je nach Ausbildung Verarbeitungsaufgaben übernehmen kann. Optional kann die Diagnoseeinrichtung ein Teil einer Regeleinrichtung sein, die Regelungsaufgaben übernehmen kann. Die Regelungseinrichtung kann eine Elektronik, eine mechanische, pneumatische und/oder hydraulische Regelung aufweisen. Es ist möglich, dass die Regelungseinrichtung Teil einer Regelungs- und Steuereinrichtung ist, die auch Steuerungsaufgaben übernehmen kann.

Die zuvor beschriebenen bevorzugten Ausführungsformen und Merkmale der Erfindung sind beliebig miteinander kombinierbar.

### Kurzbeschreibung der Figuren

Weitere Einzelheiten und Vorteile der Erfindung werden im Folgenden unter Bezug auf die beigefügten Zeichnungen beschrieben. Es zeigen:
- Figur 1: eine Vorrichtung zum Füllen von Behältern gemäß einem Ausführungsbeispiel der vorliegenden Offenbarung;
- Figur 2: eine beispielhafte Füllstation;
- Figur 3: eine weitere beispielhafte Füllstation;
- Figur 4: ein Zeit-Stellwert/Stellgröße-Diagramm eines Regelventils der beispielhaften Vorrichtung; und
- Figur 5: ein Zeit-Durchfluss-Diagramm eines Regelventils der beispielhaften Vorrichtung.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

### Detaillierte Beschreibung beispielhafter Ausführungsformen

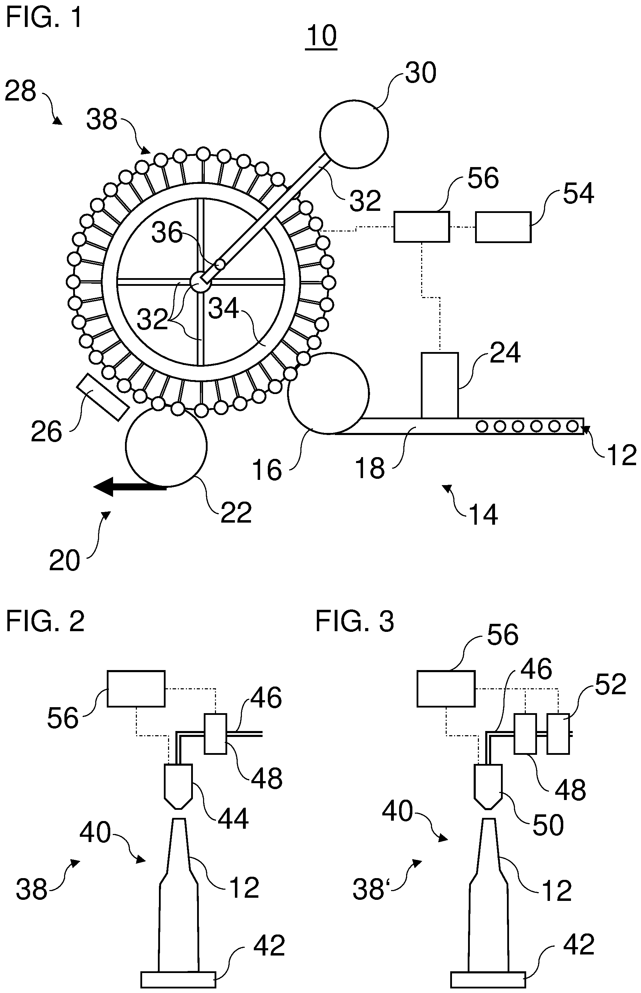

Die Figur 1 zeigt eine Vorrichtung 10 zum Füllen von Behältern 12. Der besseren Übersicht halber sind in Figur 1 nur einige Behälter 12 dargestellt. In Figur 2 ist beispielhaft eine Füllstation 38 der Vorrichtung 10 dargestellt. In Figur 3 ist beispielhaft eine alternative Ausführung der Füllstation 38' dargestellt.

Die Vorrichtung 10 ist zum Füllen der Behälter 12 mit einem, vorzugsweise flüssigen oder pastösen, Füllgut ausgebildet. Das Füllgut kann kohlensäurehaltig sein.

Die Vorrichtung 10 weist mindestens ein Regelventil 36, 44, 52 und eine Diagnoseeinrichtung 56 auf. Optional kann die Vorrichtung 10 beispielsweise einen Behälterförderer 14, einen (weiteren) Behälterförderer 20, eine Behältersperreinrichtung 24, ein Scherbenentfernungssystem 26, einen Füller 28, mindestens eine Füllstation 38 und/oder eine Benutzerschnittstelle 54 aufweisen.

Der Behälterförderer 14 kann (behälter-) stromaufwärts von dem Füller 28 bzw. der mindestens einen Füllstation 38 angeordnet sein. Beispielsweise kann der Behälterförderer 14 einen Einlaufstern 16 und/oder einen Förderabschnitt 18 aufweisen.

Der Einlaufstern 16 kann die Behälter 12 an den Füller 28 bzw. die mindestens eine Füllstation 38 übergeben, vorzugsweise einzeln bzw. im Einzeltransport.

Der Förderabschnitt 18 kann bevorzugt einspurig sein und/oder zum Einzeltransport der Behälter 12 ausgeführt sein. Der Förderabschnitt 18 kann beispielsweise (behälter-) stromaufwärts von dem Einlaufstern 16 angeordnet sein. An einem Ende des Förderabschnitts 18 können die Behälter, vorzugsweise einzeln bzw. im Einzeltransport, an den Einlaufstern 16 übergeben werden. Der Förderabschnitt 18 kann beispielsweise ein Förderabschnitt eines Linearförderers sein.

Der Behälterförderer 20 kann (behälter-) stromabwärts von dem Füller 28 bzw. der mindestens einen Füllstationen 38 angeordnet sein. Beispielsweise kann der Behälterförderer 20 einen Auslaufstern 22 aufweisen. Der Auslaufstern 22 kann gefüllte Behälter 12 von der mindestens einen Füllstation 38 übernehmen, vorzugsweise einzeln bzw. im Einzeltransport.

Bevorzugt können die Behälter 12 nach dem Füllen noch verschlossen werden. Beispielsweise kann der Behälterförderer 20 die gefüllten Behälter 12 zu einer Verschließeinrichtung, z. B. ein Verschlie-ßerkarussell, fördern.

Die Behältersperreinrichtung 24 kann (behälter-) stromaufwärts von dem Füller 28 bzw. der mindestens einen Füllstation 38 angeordnet sein. Beispielsweise kann die Behältersperreinrichtung 24 an dem Behälterförderer 14, vorzugsweise an dessen Förderabschnitt 18, angeordnet sein.

Die Behältersperreinrichtung 24 kann einen Transport der Behälter 12 sperren (bzw. blockieren) und freigeben. Beispielsweise kann die Behältersperreinrichtung 24 zum Sperren des Transports der Behälter 12 ein Sperrelement ausfahren oder ausschwenken. Das Sperrelement kann sich beispielsweise über den Behälterförderer 14 erstrecken. An dem Sperrelement können die Behälter 12 aufgestaut werden, z. B. stehend auf dem Behälterförderer 14. Vorzugsweise kann das Sperrelement zum Freigeben des Transports der Behälter 12 einfahren oder einschwenken.

Es ist auch möglich, dass die Behältersperreinrichtung 24 beispielsweise in dem Einlaufstern 16 integriert ist.

Das Scherbenentfernungssystem 26 kann Scherben von zerstörten Behältern in dem Füller 28 bzw. in der mindestens einen Füllstation 38 entfernen. Das Scherbenentfernungssystem 26 ist vorzugsweise im Bereich eines Auslaufs des Füllers 28 und/oder benachbart zu dem Auslaufstern 22 angeordnet. Das Scherbenentfernungssystem 26 kann fluidbetätigt und/oder fluidabgebend sein. Vorzugsweise kann das Scherbenentfernungssystem 26 ein Ventil zum Blockieren, Freigeben und/oder Anpassen eines Fluidstroms aufweisen. Bevorzugt kann das Scherbenentfernungssystem 26 ein Fluid, z. B. Sterilluft oder Sterilwasser, zu einem Behälteraufnahmeraum der mindestens einen Füllstation 38 abgeben, z. B. gesteuert von dem Ventil. Bevorzugt kann das Scherbenentfernungssystem 26 als ein Scherbenabspritzsystem zum Abspritzen von Scherben aus dem Behälteraufnahmeraum der mindestens einen Füllstation 38 ausgeführt sein.

Bevorzugt kann der Füller 28 als ein Rundläufer-Füller bzw. ein Füllerkarussell ausgeführt sein. Beispielsweise können mehrere Füllstationen 38 verteilt um einen Umfang des Füllers 28 angeordnet sein.

Es ist möglich, dass der Füller 28 bspw. als ein Linearfüller mit mehreren parallel und/oder hintereinander angeordneten Füllstationen 38 ausgebildet ist (nicht in den Figuren dargestellt). Es ist auch möglich, dass die Vorrichtung 10 oder der Füller 28 lediglich eine Füllstation 38 aufweist.

Vorzugsweise kann die Vorrichtung 10 bzw. der Füller 28 eine Füllgutquelle 30, ein (Füllgut-) Leitungssystem 32 und/oder einen Füllgutkessel 34 aufweisen.

Die Füllgutquelle 30 kann beispielsweise als ein Füllgutreservoir ausgeführt sein. In dem Füllgutreservoir kann das Füllgut gespeichert sein. Das Füllgutreservoir kann nachfüllbar sein. Bevorzugt kann die Füllgutquelle 30 auf einem höheren Niveau angeordnet sein als der Füllgutkessel 34.

Das Leitungssystem 32 kann die Füllgutquelle 30 und den Füllgutkessel 34 miteinander verbinden. Das Leitungssystem 32 kann bspw. eine Hauptleitung aufweisen. An einem stromaufwärtsseitigen Ende der Hauptleitung kann diese mit der Füllgutquelle 30 verbunden sein. An einem stromabwärtsseitigen Ende der Hauptleitung kann ein Füllgutverteiler des Leitungssystems 32 angeordnet sein. Von dem Füllgutverteiler können mehrere Verteilleitungen abzweigen. Die Verteilleitungen können bspw. an unterschiedlichen Umfangspositionen mit dem Füllgutkessel 34 verbunden sein.

Der Füllgutkessel 34 ist bevorzugt ringförmig bzw. als ein Ringkessel ausgeführt. Der Füllgutkessel 34 kann über mehrere Füllgutleitungen mit den Füllstationen 38 verbunden sein.

Das Regelventil 36 kann (füllgut-) stromaufwärts von dem Füllgutkessel 34 zum Regeln eines Füllstands oder eines Drucks in dem Füllgutkessel 34 angeordnet und ausgebildet sein. Im Einzelnen kann das Regelventil 36 beim Regeln beispielsweise einen Durchfluss des Füllguts von der Füllgutquelle 30 zu dem Füllgutkessel 34 anpassen.

Das Regelventil 36 kann beispielsweise an einem Auslass der Füllgutquelle 30 oder in dem Leitungssystem 32 angeordnet sein. Bevorzugt kann das Regelventil 36 in der Hauptleitung oder dem Füllgutverteiler des Leitungssystem 32 angeordnet sein.

Beispielsweise kann das Regelventil 36 stufenlos oder diskret zwischen einen Schließstellung mit 0 % Strömungsquerschnitt und einer maximalen Offenstellung mit 100 % Strömungsquerschnitt verstellbar sein.

Das Regelventil 36 kann beispielsweise elektrisch, elektromagnetisch, pneumatisch, hydraulisch oder mechanisch betätigt werden.

Bevorzugt kann das Regelventil 36 ein bewegbares, vorzugsweise verschiebbares, Ventilglied zum Öffnen und Schließen des Regelventils 36 aufweisen. Das Ventilglied kann vorzugsweise einen kegelförmigen, besonders bevorzugt kegelstumpfförmigen, Abschnitt aufweisen, der von einem Ventilsitz des Regelventils 36 zum Öffnen des Regelventils 36 abhebbar ist.

Ein Ventilhub oder eine Ventilöffnung des Regelventils 36 ist vorzugsweise eine Stellgröße des Regelventils 36. Die Stellgröße ist die Ausgangsgröße (die Stellung) des in der Regelung verwendeten Stellglieds (=Regelventil 36), mit dessen Hilfe ein gezielter Eingriff in die Regelstrecke erfolgt. Ein Ist-Ventilhub oder eine Ist-Ventilöffnung des Regelventils 36 ist vorzugsweise ein Stellwert des Regelventils 36 bzw. ein Momentanwert der Stellgröße. Der Ventilhub oder die Ventilöffnung kann beispielsweise normiert dimensionslos, in % oder in einer Längen- oder Flächeneinheit, z. B. mm oder mm², angegeben sein.

Ein erfasster (gemessener) Füllstand des Füllguts oder ein Druck in dem Füllgutkessel 34 kann eine Regelgröße des Regelventils 36 sein. Die Regelgröße ist die durch Regelung konstant oder gezielt veränderlich zu haltende Größe. Ein erfasster Ist-Füllstand des Füllguts oder Ist-Druck in dem Füllgutkessel 34 kann ein Istwert / Prozesswert der Regelgröße sein. Der (Ist-) Füllstand kann beispielsweise von einem Füllstandsensor des Füllgutkessels 34 erfasst werden. Der (Ist-) Druck kann beispielsweise von einem Drucksensor des Füllgutkessels 34 erfasst werden.

Ein gewünschter Füllstand oder ein gewünschter Druck in dem Füllgutkessel 34 kann eine Führungsgröße des Regelventils 36 sein. Die Führungsgröße ist diejenige Größe, auf die die Regelgröße gebracht werden soll. Die Führungsgröße kann zeitlich veränderlich sein. Die Führungsgröße kann beispielsweise von einem Benutzer mittels der Benutzerschnittstelle 54 oder einem technischen System der Vorrichtung 10 vorgegeben werden. Eine Regelabweichung kann als eine Differenz aus Führungsgröße und Regelgröße bzw. Istwert/Prozesswert berechnet werden. Entsprechend kann dann der Stellwert gebildet und über das Regelventil 36 (=Stellglied) das zu regelnde System beeinflusst werden.

Die mindestens eine Füllstation 38 kann die Behälter 12 mit einem, vorzugsweise flüssigen oder pastösen, Füllgut füllen. Es ist möglich, dass die Behälter 12 in der mindestens einen Füllstation 38 ebenfalls evakuiert, vorgespannt und/oder gespült werden können. Entsprechend kann die mindestens eine Füllstation 38 jeweils einen Evakuierungskanal, einen Vorspannkanal und/oder eine Spülkanal aufweisen.

Die Figuren 2 und 3 zeigen jeweils ein Ausführungsbeispiel einer Füllstation 38 bzw. 38'.

Die Füllstation 38 kann einen Aufnahmeraum 40, eine Behälterabstützung 42, ein Regelventil 44, einen Füllgutkanal 46 und/oder eine Durchflusserfassungseinrichtung 48 aufweisen.

In dem Aufnahmeraum 40 kann jeweils ein Behälter 12 zum Füllen aufgenommen bzw. positioniert werden.

Der Behälter 12 kann in dem Aufnahmeraum 40 mittels der Behälterabstützung 42 der Füllstation 38 abgestützt sein. Die Behälterabstützung 42 kann beispielsweise eine Bodenplatte zum bodenseitigen Abstützen des jeweiligen Behälters 12 aufweisen. Alternativ oder zusätzlich kann die Behälterabstützung 42 den Behälter 12 beispielsweise an dessen Mantel oder Hals abstützen.

Das Regelventil 44 kann als ein Füllventil ausgeführt sein. Bevorzugt kann das Regelventil 44 als ein sogenanntes Proportional-Strömungs-Regelventil ausgeführt sein (engl.: proportional flow regulation valve).

Das Regelventil 44 kann das Füllgut in den Behälter 12, der im Aufnahmeraum 40 der Füllstation 38 positioniert ist, abgeben. Beispielsweise kann das Regelventil 44 stufenlos oder diskret zwischen einen Schließstellung mit 0 % Strömungsquerschnitt und einer maximalen Offenstellung mit 100 % Strömungsquerschnitt verstellbar sein.

Das Regelventil 44 kann beispielsweise elektrisch, elektromagnetisch, pneumatisch, hydraulisch oder mechanisch betätigt werden.

Bevorzugt kann das Regelventil 44 ein bewegbares, vorzugsweise verschiebbares, Ventilglied zum Öffnen und Schließen des Regelventil 44 aufweisen. Das Ventilglied kann vorzugsweise einen kegelförmigen, besonders bevorzugt kegelstumpfförmigen, Abschnitt aufweisen, der von einem Ventilsitz des Regelventils 44 zum Öffnen des Regelventils 44 abhebbar ist.

Es ist möglich, dass ein Auslass des Regelventils 44 und eine Behältermündung des Behälters 12 in dem Aufnahmeraum 40 für das Füllen aneinander anpressbar sind. Hierfür kann die Füllstation 38 eine, vorzugsweise vertikale, Verstelleinrichtung aufweisen (nicht gesondert in den Figuren dargestellt). Die Verstelleinrichtung kann die Behälterabstützung 42 (zusammen mit dem abgestützten Behälter 12) hin zu und weg von dem Auslass des Regelventils 44 bewegen. Alternativ oder zusätzlich kann die Verstelleinrichtung das Regelventil 44 hin zu und weg von der Behälterabstützung 42 (bzw. dem abgestützten Behälter 12) bewegen. Die Verstelleinrichtung kann bspw. elektrisch, elektromagnetisch, pneumatisch, hydraulisch oder mechanisch betrieben werden.

Das Regelventil 44 kann das Füllgut über den Füllgutkanal 46 empfangen. Der Füllgutkanal 46 kann das Regelventil 44 mit dem Füllgutkessel 34 (siehe Figur 1) verbinden.

Die Durchflusserfassungseinrichtung 48 kann dazu ausgebildet sein, einen Füllgutdurchfluss zu dem Regelventil 44 zu erfassen. Beispielsweise kann die Durchflusserfassungseinrichtung 48 einen Durchfluss durch den Füllgutkanal 46 erfassen. Beispielsweise kann die Durchflusserfassungseinrichtung 48 den Durchfluss messen, z. B. mengen- und/oder volumenmäßig. Die Durchflusserfassungseinrichtung 48 kann ein Messsignal, das den erfassten Durchfluss angibt, ausgeben, z. B. zu der Diagnoseeinrichtung 56.

Die Durchflusserfassungseinrichtung 48 kann jegliches geeignetes Durchflussmessprinzip zum Erfassen des Durchflusses aufweisen. Besonders bevorzugt kann die Durchflusserfassungseinrichtung 48 eine magnetisch-induktive Durchflusserfassungseinrichtung oder eine Ultraschall-Durchflusserfassungseinrichtung sein.

Die Figur 3 zeigt eine gegenüber der Figur 2 modifizierte Füllstation 38'.

Die Füllstation 38' kann statt des Regelventils 44 ein Füllventil 50 aufweisen. Das Füllventil 50 kann beispielsweise zum wahlweisen Freigeben oder Blockieren der Füllgutkanals 46 ausgebildet sein. Das Füllventil 50 kann das Füllgut in den Behälter 12, der im Aufnahmeraum 40 der Füllstation 38' positioniert ist, abgeben. Das Füllventil 50 kann beispielsweise elektrisch, elektromagnetisch, pneumatisch, hydraulisch oder mechanisch betätigt werden.

Das Füllventil 50 kann ein bewegbares, vorzugsweise verschiebbares, Ventilglied zum Öffnen und Schließen des Füllventils 50 aufweisen. Das Ventilglied kann vorzugsweise einen kegelförmigen, besonders bevorzugt kegelstumpfförmigen, Abschnitt aufweisen, der von einem Ventilsitz des Füllventils 50 zum Öffnen des Füllventils 50 abhebbar ist. Es ist möglich, dass ein Auslass des Füllventils 50 und eine Behältermündung des Behälters 12 in dem Aufnahmeraum 40 für das Füllen aneinander anpressbar sind, wie bereits für das Regelventil 44 beschrieben.

Die Füllstation 38' kann das Regelventil 52 aufweisen. Das Regelventil 52 kann beispielsweise in dem Füllgutkanal 46 angeordnet sein. Das Regelventil 52 kann (füllgut-) stromaufwärts von dem Füllventil 50 angeordnet sein. Das Regelventil 52 kann (füllgut-) stromaufwärts oder (füllgut-) stromabwärts von der Durchflusserfassungseinrichtung 48 angeordnet sein.

Im Übrigen kann das Regelventil 52 wie bereits für das Regelventilventil 44 beschrieben ausgebildet sein.

Ein Ventilhub oder eine Ventilöffnung des Regelventils 44, 52 ist vorzugsweise eine Stellgröße des Regelventils 44, 52. Die Stellgröße ist die Ausgangsgröße (die Stellung) des in der Regelung verwendeten Stellglieds (=Regelventil 44, 52), mit dessen Hilfe ein gezielter Eingriff in die Regelstrecke erfolgt. Ein Ist-Ventilhub oder eine Ist-Ventilöffnung des Regelventils 44, 52 ist vorzugsweise ein Stellwert des Regelventils 44, 52 bzw. ein Momentanwert der Stellgröße. Der Ventilhub oder die Ventilöffnung kann beispielsweise normiert dimensionslos, in % oder in einer Längen- oder Flächeneinheit, z. B. mm oder mm², angegeben sein.

Ein erfasster (gemessener) Durchfluss des Füllguts durch den Füllgutkanal 46 (bzw. das Regelventil 44, 52) kann eine Regelgröße des Regelventils 44, 52 sein. Die Regelgröße ist die durch Regelung konstant oder gezielt veränderlich zu haltende Größe. Ein erfasster Ist-Durchfluss des Füllguts durch den Füllgutkanal 46 kann ein Istwert / Prozesswert der Regelgröße sein. Der (Ist-) Durchfluss kann beispielsweise von der Durchflusserfassungseinrichtung 48 erfasst werden.

Ein gewünschter Durchfluss durch das Regelventil 44, 52 bzw. den Füllgutkanal 46 kann eine Führungsgröße des Regelventils 44, 52 sein. Die Führungsgröße ist diejenige Größe, auf die die Regelgröße gebracht werden soll. Die Führungsgröße kann zeitlich veränderlich sein. Die Führungsgröße kann beispielsweise von einem Benutzer mittels der Benutzerschnittstelle 54 oder einem technischen System der Vorrichtung 10 vorgegeben werden. Eine Regelabweichung kann als eine Differenz aus Führungsgröße und Regelgröße bzw. Istwert/Prozesswert berechnet werden. Entsprechend kann dann der Stellwert gebildet und über das Regelventil 44, 52 (=Stellglied) das zu regelnde System beeinflusst werden.

In der Figur 2 weist die Füllstation 38 das Regelventil 44 auf, und in der Figur 3 weist die Füllstation 38' das Regelventil 52 auf. Es ist auch möglich, dass eine Füllstation 38 der Vorrichtung 10 bzw. des Füllers 28 gar kein Regelventil aufweist. Die Vorrichtung 10 bzw. der Füller 28 könnte beispielsweise lediglich das Regelventil 36 (siehe Figur 1) aufweisen.

Es ist möglich, dass das mindestens eine Regelventil 36, 44, 52 mit einer Regeleinrichtung der Vorrichtung 10 verbunden sein kann (nicht in den Figuren dargestellt). Die Regeleinrichtung kann Signale von dem mindestens einen Regelventil 36, 44, 52 empfangen und/oder Signale zu dem mindestens einen Regelventil 36, 44, 52 ausgeben. In der Regeleinrichtung kann die eigentliche Regelung elektronisch und/oder programmtechnisch umgesetzt sein. Es ist auch möglich, dass die Regeleinrichtung zumindest teilweise in dem mindestens einen Regelventil 36, 44, 52 umfasst ist.

Eine Regelung des mindestens einen Regelventils 36, 44, 52 kann beispielsweise eine Regelung mit proportionalem Verhalten (P-Glied), mit integralem Verhalten (I-Glied) und/oder mit differentialem Verhalten (D-Glied) sein.

Die Benutzerschnittstelle 54 kann eine Ausgabeeinrichtung und/oder eine Eingabeeinrichtung aufweisen.

Die Ausgabeeinrichtung kann beispielsweise eine akustische, visuelle und/oder haptische Ausgabeeinrichtung sein. Über die Ausgabeeinrichtung können Informationen an einen Benutzer ausgegeben werden. Die Ausgabeeinrichtung kann beispielsweise eine (z. B. berührungsempfindliche) Anzeige, einen Lautsprecher und/oder mindestens eine Signalleuchte aufweisen.

Mittels der Ausgabeeinrichtung kann beispielsweise eine von der Diagnoseeinrichtung ermittelte Information bezüglich eines Funktionsfähigkeitszustand des mindestens einen Regelventils 36, 44, 52 an einen Benutzer ausgegeben werden. Beispielsweise kann eine Warnung oder ein Hinweis ausgegeben werden, wenn ein beeinträchtigter Funktionsfähigkeitszustand ermittelt wird.

Die Eingabeeinrichtung kann beispielsweise eine akustische, visuelle und/oder taktile Eingabeeinrichtung sein. Über die Eingabeeinrichtung können Informationen, vorzugsweise Eingabebefehle, von einem Benutzer eingegeben werden. Die Eingabeeinrichtung kann beispielsweise eine berührungsempfindliche Anzeige, eine Tastatur, mindestens einen Knopf oder Schalter o. Ä., eine Kamera und/oder ein Mikrofon aufweisen. Die eingegebenen Informationen können beispielsweise in einem Datenspeicher der Diagnoseeinrichtung 56 gespeichert sein.

Die Diagnoseeinrichtung 56 ist dazu konfiguriert, eine Funktionsfähigkeitsüberwachung des mindestens einen Regelventils 36, 44, 52 durchzuführen.

Die Diagnoseeinrichtung 56 kann mit jeglicher hierin beschriebenen Komponente zum Senden und/oder Empfangen von Signalen verbunden sein. Insbesondere kann die Diagnoseeinrichtung 56 mit dem mindestens einen Regelventil 36, 44, 52 und/oder deren Regeleinrichtung zum Senden und/oder Empfangen von Signalen verbunden sein.

Die Diagnoseeinrichtung 56 überwacht einen jeweiligen Stellwert einer Stellgröße des mindestens einen Regelventils 36, 44, 52 während des Regelns. Die Diagnoseeinrichtung 56 kann den jeweiligen Stellwert des mindestens einen Regelventils 36, 44, 52 parallel zum Regeln überwachen. In anderen Worten, das Regeln mittels des mindestens einen Regelventils 36, 44, 52 findet statt, und zusätzlich dazu überwacht die Diagnoseeinrichtung 56 den jeweiligen Stellwert des mindestens einen Regelventils 36, 44, 52.

Im Einzelnen kann die Diagnoseeinrichtung 56 den Stellwert während einer Zeitdauer, in der mittels des jeweiligen Regelventils 36, 44, 52 geregelt wird, überwachen.

Abhängig von der Überwachung ermittelt die Diagnoseeinrichtung 56 einen Funktionsfähigkeitszustand des jeweiligen Regelventils 36, 44, 52. Beispielsweise kann die Diagnoseeinrichtung 56 einen normalen Funktionsfähigkeitszustand oder einen beeinträchtigten Funktionsfähigkeitszustand ermitteln.

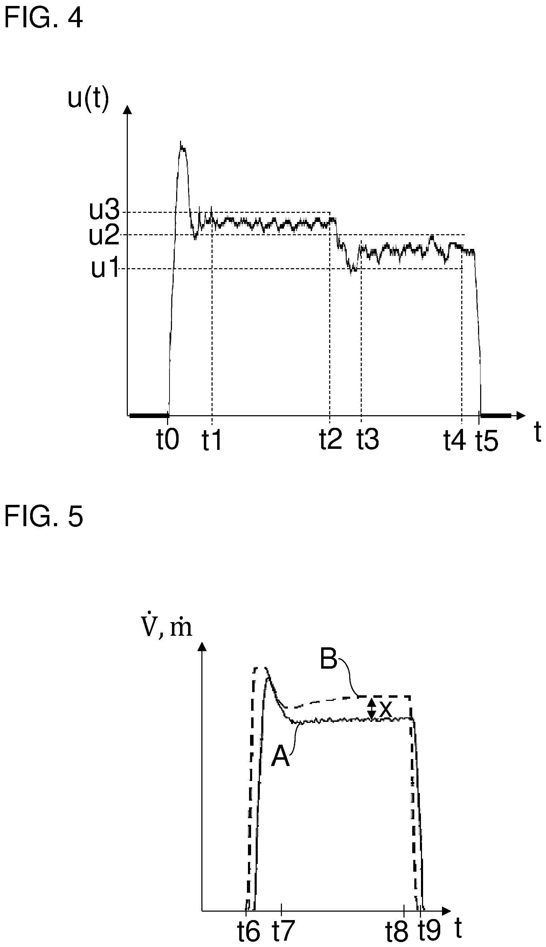

Nachfolgend sind unterschiedliche, miteinander kombinierbare Varianten der Überwachung und Ermittlung des Funktionsfähigkeitszustands erläutert. Zur besseren Verständlichkeit ist zunächst ein beispielhafter Normalbetrieb des Regelventils 36 unter Bezugnahme auf Figur 4 erläutert.

Die Figur 4 zeigt beispielhaft einen Stellwert bzw. eine Stellgröße u(t) (=Ventilhub bzw. Ventilöffnung) des Regelventils 36 über die Zeit t bei einem normalen Funktionsfähigkeitszustand des Regelventils 36.

Zu einem Zeitpunkt t0 kann ein Start der Vorrichtung 10 stattfinden. Zu diesem Zeitpunkt kann beispielsweise begonnen werden, die Behälter 12 und/oder den Füllgutkessel 34 zu füllen. Entsprechend kann das Regelventil 36 geöffnet werden und ein (Nach-) Füllen des Füllgutkessels 34 ermöglichen. Vom Zeitpunkt t0 bis zu einem Zeitpunkt t1 kann ein Einschwingvorgang des Stellwerts des Regelventils 36 stattfinden. Zwischen den Zeitpunkten t1 und t2 kann der Stellwert in einem eingeschwungenen Zustand sein. Der Stellwert kann im Wesentlichen konstant sein bzw. nur geringfügig schwanken. Hier können im Wesentlichen konstante Betriebsbedingungen der Vorrichtung 10 vorliegen. Zu dem Zeitpunkt t2 kann eine Leistungsverringerung der Vorrichtung 10 bzw. des Füllers 28 erfolgen, z. B.: von 60.000 Behältern pro Stunde auf 40.000 Behälter pro Stunde. Vom Zeitpunkt t2 bis zu einem Zeitpunkt t3 kann wiederum ein Einschwingvorgang des Stellwerts des Regelventils 36 stattfinden. Zwischen den Zeitpunkten t3 und t4 kann der Stellwert wiederum in einem eingeschwungenen Zustand sein. Der Stellwert kann im Wesentlichen konstant sein bzw. nur geringfügig schwanken. Hier können wiederum im Wesentlichen konstante Betriebsbedingungen der Vorrichtung 10 vorliegen. Zu einem Zeitpunkt t4 kann ein Stopp der Vorrichtung 10 eingeleitet werden. Zwischen dem Zeitpunkt t4 und t5 muss immer weniger Füllgut in den Füllgutkessel 34 geleitet werden. Das Regelventil 36 kann bis zum Zeitpunkt t5 geschlossen werden. Der Stellwert kann bis zum Zeitpunkt t5 auf null abgesenkt werden.

Bevorzugt kann die Überwachung des Stellwerts des Regelventils 36 in einem vorgegebenen Zeitfenster erfolgen, und der Funktionsfähigkeitszustand des Regelventils 36 kann in Abhängigkeit von dem in dem vorgegebenen Zeitfenster überwachten Stellwert ermittelt werden.

In Bezug auf die Figur 4 kann ein vorgegebenes Zeitfenster zwischen t1 und t2 und/oder zwischen t3 und t4 liegen. Allgemein kann das vorgegebene Zeitfenster durch eine oder mehrerer Bedingungen vorgegeben sein. Das vorgegebene Zeitfenster kann beispielsweise nach einer (z. B. Behälterfüll-) Startphase der Vorrichtung 10 beginnen. Das vorgegebene Zeitfenster kann beispielsweise frühestens 1 min, frühestens 2 min oder frühestens 3 min nach einem (z. B. Behälterfüll-) Start der Vorrichtung 10 beginnen. Das vorgegebene Zeitfenster kann beispielsweise vor einer (z. B. Behälterfüll-) Stoppphase der Vorrichtung 10 enden. Das vorgegebene Zeitfenster kann beispielsweise spätestens 3 min, spätestens 2 min oder spätestens 1 min vor einem (Behälterfüll-) Stopp der Vorrichtung 10 enden. Das vorgegebene Zeitfenster kann beispielsweise vor einer Leistungsänderung der Vorrichtung 10 enden und/oder nach einer Leistungsänderung der Vorrichtung 10 beginnen.

Bevorzugt kann die Überwachung des Stellwerts des Regelventils 36 in einem eingeschwungenen Zustand des Stellwerts erfolgen, und der Funktionsfähigkeitszustand des Regelventils 36 kann in Abhängigkeit von dem im eingeschwungenen Zustand überwachten Stellwert ermittelt werden.

In Bezug auf die Figur 4 kann der Stellwert zwischen t1 und t2 und/oder zwischen t3 und t4 eingeschwungen sein. Allgemein kann ein eingeschwungener Zustand vorliegen, wenn der Stellwert im Zeitverlauf um einen Mittelwert schwankt. Im eingeschwungenen Zustand kann der Stellwert bspw. in einem Bereich zwischen ± 5%, vorzugsweise ± 3 %, um den Mittelwert schwanken. Im eingeschwungenen Zustand kann ein Verlauf des Stellwerts frei von Trends usw. sein. Im eingeschwungenen Zustand kann der Stellwert beispielsweise um maximal 7 %, maximal 6 % oder maximal 5 % schwanken.

Bevorzugt kann die Überwachung des Stellwerts des Regelventils 36 derart erfolgen, dass der Stellwert bei konstanten Betriebsbedingungen der Vorrichtung 10 überwacht wird. Der Funktionsfähigkeitszustand des Regelventils 36 kann in Abhängigkeit von dem bei den konstanten Betriebsbedingungen überwachten Stellwert ermittelt werden.

In Bezug auf die Figur 4 können zwischen t1 und t2 und/oder zwischen t3 und t4 im Wesentlichen konstante Betriebsbedingungen der Vorrichtung 10 vorliegen. Allgemein kann die Diagnoseeinrichtung 56 ermitteln, dass konstante Betriebsbedingungen vorliegen, wenn eine oder mehrere Bedingungen erfüllt sind. Beispielsweise kann eine Leistung der Vorrichtung 10 im Wesentlichen konstant und in einem vorgegebenen Leistungsbereich sein. Beispielsweise kann die Behältersperreinrichtung 24 offen sein. Beispielsweise kann ein Füllstand im Füllgutkessel 34 im Wesentlichen konstant und innerhalb eines vorgegebenen Füllstandbereichs sein. Beispielsweise kann ein Druck im Füllgutkessel 34 im Wesentlichen konstant und innerhalb eines vorgegebenen Druckbereichs sein. Beispielsweise kann ein Ventil des Scherbenentfernungssystems 26 geschlossen sein. Beispielsweise kann ein Vordruck des Füllguts beim Zuführen zum Füllgutkessel 34 im Wesentlichen konstant und innerhalb eines vorgegebenen Vordruckbereichs sein. Beispielsweise kann eine Temperatur des Füllguts im Wesentlichen konstant und innerhalb eines vorgegebenen Temperaturbereichs sein.

Bevorzugt kann die Ermittlung des Funktionsfähigkeitszustands des Regelventils 36 ferner in Abhängigkeit von einem zulässigen Stellwertbereich ermittelt werden. Liegt der überwachte Stellwert beispielsweise innerhalb des zulässigen Stellwertbereichs, so kann ein normaler Funktionsfähigkeitszustand des Regelventils 36 ermittelt werden, d.h. das Regelventil 36 funktioniert normal. Liegt der überwachte Stellwert beispielsweise außerhalb des zulässigen Stellwertbereichs, so kann ein beeinträchtigter Funktionsfähigkeitszustand des Regelventils 36 ermittelt werden, z. B. das Regelventil 36 funktioniert nicht, nicht vollständig, anormal oder ein Ausfall aufgrund von Verschleiß ist zu erwarten.

In Bezug auf die Figur 4 kann ein erster zulässiger Stellwertbereich beispielsweise zwischen u2 und u3 liegen. Beispielsweise kann der erste zulässige Stellwertbereich für den eingeschwungenen Zustand zwischen t1 und t2, die konstanten Betriebsbedingungen zwischen t1 und t2 und/oder das vorgegebene Zeitfenster zwischen t1 und t2 vorgegeben sein.

In Bezug auf die Figur 4 kann ein zweiter zulässiger Stellwertbereich beispielsweise zwischen u1 und u2 liegen. Beispielsweise kann der zweite zulässige Stellwertbereich für den eingeschwungenen Zustand zwischen t3 und t4, die konstanten Betriebsbedingungen zwischen t3 und t4 und/oder das vorgegebene Zeitfenster zwischen t3 und t4 vorgegeben sein.

Allgemein kann der zulässige Stellwertbereich beispielsweise in einem Bereich ≥ 50 %, ≥ 55 % oder ≥ 60 % und/oder ≤ 75 %, ≤ 70 % oder ≤ 65 % eines Maximalwerts der Stellgröße liegen. Der zulässige Stellwertbereich kann in Abhängigkeit von mindestens einem Parameter vorgegeben sein. Beispielsweise kann der zulässige Stellwertbereich abhängig von einer Leistung der Vorrichtung 10 (siehe z. B. Figur 4 - erster zulässiger Stellwertbereich bei 60.000 Behältern pro Stunde; zweiter zulässiger Stellwertbereich bei 40.000 Behältern pro Stunde), einem Format und/oder einem Füllvolumen der Behälter 12, einem Füllstand des Füllgutkessel 34, einem Druck in dem Füllgutkessel 34, einem Vordruck des Füllguts stromaufwärts von dem Füllgutkessel 34 und/oder einer Temperatur des Füllguts vorgegeben sein. D.h., für unterschiedliche Parameter können unterschiedliche zulässige Stellwertbereiche vorgegeben sein, wenn gewünscht.

Die vorherige Beschreibung der Überwachung des Stellwerts des Regelventils 36 und der Ermittlung von dessen Funktionsfähigkeitszustands kann auch auf das Regelventil 44 oder 52 angewendet werden. Bevorzugt kann eine Überwachung des Stellwerts des Regelventils 44, 52 und eine Ermittlung eines Funktionsfähigkeitszustands des Regelventils 44, 52 jedoch wie nachstehend beispielhaft unter Bezugnahme auf Figur 5 erläutert erfolgen.

Die Figur 5 zeigt beispielhaft einen erfassten Durchfluss (durchgezogene Kurve A) durch das Regelventil 44, 52 über die Zeit t für einen Füllvorgang eines Behälters 12.

Zum Zeitpunkt t6 kann eine Füllung des Behälters 12 beginnen. Zwischen dem Zeitpunkt t6 und einem Zeitpunkt t7 kann sich der Stellwert des Regelventils 44, 52 und damit der erfasste Durchfluss einschwingen. Ab dem Zeitpunkt t7 bis zu einem Zeitpunkt t8 kann der Stellwert des Regelventils 44, 52 und damit der erfasste Durchfluss im Wesentlichen konstant bzw. eingeschwungen sein. Ab dem Zeitpunkt t8 kann ein Füllstopp initiiert werden. Das Regelventil 44, 52 beginnt sich zu schließen. Der erfasste Durchfluss kann abnehmen. Zu einem Zeitpunkt t9 kann die Füllung des Behälters 12 abgeschlossen sein. Der Stellwert des Regelventils 44, 52 und der erfasste Durchfluss kann null sein.

Die Figur 5 zeigt ferner einen theoretischen Durchfluss (Kurve B) durch das Regelventil 44, 52 über die Zeit t für den Füllvorgang des Behälters 12. Im Einzelnen kann aus dem überwachten Stellwert des Regelventils 44, 52 der theoretische Durchfluss ermittelt, z. B. berechnet, werden. Beispielsweise kann aus dem überwachten Stellwert eine jeweilige Strömungsquerschnittfläche ermittelt und daraus der theoretische Durchfluss ermittelt werden. Die Ermittlung kann bspw. rein mathematisch, empirisch und/oder simulativ durchgeführt oder gestützt sein.

Durch einen Vergleich zwischen dem erfassten Füllgutdurchfluss und einem theoretischen Füllgutdurchfluss kann nunmehr von der Diagnoseeinrichtung 56 der Funktionsfähigkeitszustand des Regelventils 44, 52 ermittelt werden. Der Vergleich kann vorzugsweise für eine Konstantdurchflussphase, ein vorgegebenes Zeitfenster und/oder einen eingeschwungenen Zustand des Stellwerts / des Durchflusses durchgeführt werden (vgl. auch Erläuterungen zu Figur 4). Ist eine Abweichung x zwischen dem erfassten Durchfluss (Kurve A) und dem theoretischen Durchfluss (Kurve B) im überwachten Zeitabschnitt beispielsweise größer als ein vorgegebener Grenzwert, kann ein beeinträchtigter Funktionsfähigkeitszustand des Regelventils 44, 52 ermittelt werden. Ist eine Abweichung x zwischen dem erfassten Durchfluss (Kurve A) und dem theoretischen Durchfluss (Kurve B) im überwachten Zeitabschnitt kleiner als ein vorgegebener Grenzwert, kann ein normaler Funktionsfähigkeitszustand des Regelventils 44, 52 ermittelt werden.

Die vorherige Beschreibung der Überwachung des Stellwerts des Regelventils 44, 52 und der Ermittlung von dessen Funktionsfähigkeitszustands kann auch auf das Regelventil 36 angewendet werden. Die Verfahren sind auch kombinierbar.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen. Insbesondere sind die einzelnen Merkmale des unabhängigen Anspruchs 1 jeweils unabhängig voneinander offenbart. Alle Bereichsangaben hierin sind derart offenbart zu verstehen, dass gleichsam alle in den jeweiligen Bereich fallenden Werte einzeln offenbart sind, z. B. auch als jeweils bevorzugte engere Außengrenzen des jeweiligen Bereichs.

### Bezugszeichenliste

- 10: Vorrichtung zum Füllen von Behältern
- 12: Behälter
- 14: Behälterförderer
- 16: Einlaufstern
- 18: Förderabschnitt
- 20: Behälterförderer
- 22: Auslaufstern
- 24: Behältersperreinrichtung
- 26: Scherbenentfernungssystem
- 28: Füller
- 30: Füllgutquelle
- 32: Leitungssystem
- 34: Füllgutkessel
- 36: Regelventil
- 38: Füllstation
- 40: Aufnahmeraum
- 42: Behälterabstützung
- 44: Regelventil
- 46: Füllgutkanal
- 48: Durchflusserfassungseinrichtung
- 50: Füllventil
- 52: Regelventil
- 54: Benutzerschnittstelle
- 56: Diagnoseeinrichtung

## Patentansprüche

1. Vorrichtung (10) zum Füllen von Behältern (12) mit einem Füllgut, wobei die Vorrichtung (10) aufweist:
ein Regelventil (36, 44, 52) für das Füllgut; und
eine Diagnoseeinrichtung (56), die dazu konfiguriert ist:
- einen Stellwert einer Stellgröße, vorzugsweise eines Ventilhubs oder einer Ventilöffnung, des Regelventils (36, 44, 52) während des Regelns zu überwachen; und
- einen Funktionsfähigkeitszustand, vorzugsweise Verschleißzustand, des Regelventils (36, 44, 52) in Abhängigkeit von dem überwachten Stellwert zu ermitteln.

2. Vorrichtung (10) nach Anspruch 1, wobei:
die Diagnoseeinrichtung (56) ferner dazu konfiguriert ist, den Funktionsfähigkeitszustand des Regelventils (36, 44, 52) ferner in Abhängigkeit von einem zulässigen Stellwertbereich zu ermitteln, wobei vorzugsweise:
der Funktionsfähigkeitszustand des Regelventils (36, 44, 52) als ein beeinträchtigter Funktionsfähigkeitszustand ermittelt wird, wenn der überwachte Stellwert außerhalb des zulässigen Stellwertbereichs ist, und/oder als ein normaler Funktionsfähigkeitszustand ermittelt wird, wenn der überwachte Stellwert innerhalb des zulässigen Stellwertbereichs ist.

3. Vorrichtung (10) nach Anspruch 2, wobei:
der zulässige Stellwertbereich in einem Bereich ≥ 50 %, ≥ 55 % oder ≥ 60 % und/oder ≤ 75 %, ≤ 70 % oder ≤ 65 % eines Maximalwerts der Stellgröße liegt; und/oder
der zulässige Stellwertbereich vorgegeben ist in Abhängigkeit von mindestens einem von:
- eine Leistung der Vorrichtung (10);
- ein Format und/oder ein Füllvolumen der Behälter (12);
- ein Füllstand in einem Füllgutkessel (34) der Vorrichtung (10);
- ein Druck in einem Füllgutkessel (34) der Vorrichtung (10);
- ein Vordruck des Füllguts stromaufwärts von einem Füllgutkessel (34) der Vorrichtung (10); und
- eine Temperatur des Füllguts.

4. Vorrichtung (10) nach einem der vorherigen Ansprüche, wobei:
die Diagnoseeinrichtung (56) ferner dazu konfiguriert ist:
- den Stellwert des Regelventils (36, 44, 52) während des Regelns derart zu überwachen, dass der Stellwert in einem vorgegebenen Zeitfenster und/oder in einem eingeschwungenen Zustand überwacht wird; und
- den Funktionsfähigkeitszustand des Regelventils (36, 44, 52) derart in Abhängigkeit von dem überwachten Stellwert zu ermitteln, dass der Funktionsfähigkeitszustand des Regelventils (36, 44, 52) in Abhängigkeit von dem in dem vorgegebenen Zeitfenster und/oder in dem eingeschwungenen Zustand überwachten Stellwert ermittelt wird.

5. Vorrichtung (10) nach Anspruch 4, wobei das vorgegebene Zeitfenster:
nach einer Startphase der Vorrichtung (10) beginnt; und/oder
frühestens 1 min, frühestens 2 min oder frühestens 3 min nach einem Start der Vorrichtung (10) beginnt; und/oder
vor einer Stoppphase der Vorrichtung (10) endet; und/oder
spätestens 3 min, spätestens 2 min oder spätestens 1 min vor einem (z. B. Behälterfüll-) Stopp der Vorrichtung (10) endet; und/oder
vor einer Leistungsänderung der Vorrichtung (10) endet und/oder nach einer Leistungsänderung der Vorrichtung (10) beginnt.

6. Vorrichtung (10) nach einem der vorherigen Ansprüche, wobei:
die Diagnoseeinrichtung (56) ferner dazu konfiguriert ist:
- den Stellwert des Regelventils (36, 44, 52) während des Regelns derart zu überwachen, dass der Stellwert bei im Wesentlichen konstanten Betriebsbedingungen der Vorrichtung (10) überwacht wird; und
- den Funktionsfähigkeitszustand des Regelventils (36, 44, 52) derart in Abhängigkeit von dem überwachten Stellwert zu ermitteln, dass der Funktionsfähigkeitszustand abhängig von dem bei den im Wesentlichen konstanten Betriebsbedingungen überwachten Stellwert ermittelt wird.

7. Vorrichtung (10) nach Anspruch 6, wobei die Diagnoseeinrichtung (56) ferner dazu konfiguriert ist, zu ermitteln, dass im Wesentlichen konstante Betriebsbedingungen vorliegen, wenn mindestens eines erfüllt ist von:
eine Leistung der Vorrichtung (10) ist in einem vorgegebenen Leistungsbereich;
eine Behältersperreinrichtung (24) der Vorrichtung (10) ist offen;
ein Füllstand in einem Füllgutkessel (34) der Vorrichtung (10) ist innerhalb eines vorgegebenen Füllstandbereichs;
ein Druck in einem Füllgutkessel (34) der Vorrichtung (10) ist innerhalb eines vorgegebenen Druckbereichs;
ein Ventil eines Scherbenentfernungssystems (26) der Vorrichtung (10) ist geschlossen;
ein Vordruck des Füllguts beim Zuführen zu einem Füllgutkessel (34) der Vorrichtung (10) ist innerhalb eines vorgegebenen Vordruckbereichs; und/oder
eine Temperatur des Füllguts ist innerhalb eines vorgegebenen Temperaturbereichs.

8. Vorrichtung (10) nach einem der vorherigen Ansprüche, ferner aufweisend:
eine Durchflusserfassungseinrichtung (48), die zum Erfassen eines Füllgutdurchflusses durch das Regelventil (36, 44, 52) angeordnet ist,
wobei:
die Diagnoseeinrichtung (56) ferner dazu konfiguriert ist, den Funktionsfähigkeitszustand des Regelventils (36, 44, 52) ferner in Abhängigkeit von einem von der Durchflusserfassungseinrichtung (48) erfassten Füllgutdurchfluss zu ermitteln, vorzugsweise durch einen Vergleich zwischen dem erfassten Füllgutdurchfluss und einem theoretischen Füllgutdurchfluss durch das Regelventil (36, 44, 52), der in Abhängigkeit von dem überwachten Stellwert ermittelt wird.

9. Vorrichtung (10) nach einem der vorherigen Ansprüche, ferner aufweisend:
eine Ausgabeeinrichtung zum Ausgeben einer Information an einen Benutzer; wobei die Diagnoseeinrichtung (56) ferner dazu konfiguriert ist, die Ausgabeeinrichtung zum Ausgeben einer Information bezüglich des ermittelten Funktionsfähigkeitszustands zu betreiben.

10. Verfahren zur Funktionsfähigkeitsermittlung eines Regelventils (36, 44, 52) einer Vorrichtung (10), vorzugsweise nach einem der vorherigen Ansprüche, zum Füllen von Behältern (12) mit einem Füllgut, wobei das Verfahren aufweist:
Regeln mittels des Regelventils (36, 44, 52);
Überwachen eines Stellwerts einer Stellgröße, vorzugsweise eines Ventilhubs oder einer Ventilöffnung, des Regelventils (36, 44, 52) mittels einer Diagnoseeinrichtung (56) während des Regelns; und
Ermitteln eines Funktionsfähigkeitszustands des Regelventils (36, 44, 52) in Abhängigkeit von dem überwachten Stellwert mittels der Diagnoseeinrichtung (56); und optional
Ausgeben des ermittelten Funktionsfähigkeitszustands an einen Benutzer mittels einer Ausgabeeinrichtung.

11. Verfahren nach Anspruch 10, wobei:
das Ermitteln des Funktionsfähigkeitszustands des Regelventils (36, 44, 52) ferner abhängig von einem zulässigen Stellwertbereich ist,
wobei vorzugsweise:
der Funktionsfähigkeitszustand des Regelventils (36, 44, 52) als ein beeinträchtigter Funktionsfähigkeitszustand ermittelt wird, wenn der überwachte Stellwert außerhalb des zulässigen Stellwertbereichs ist, und/oder als ein normaler Funktionsfähigkeitszustand ermittelt wird, wenn der überwachte Stellwert innerhalb des zulässigen Stellwertbereichs ist.

12. Verfahren nach Anspruch 10 oder Anspruch 11, wobei:
das Überwachen des Stellwerts in einem vorgegebenen Zeitfenster, in einem eingeschwungenen Zustand und/oder bei im Wesentlichen konstanten Betriebsbedingungen der Vorrichtung (10) erfolgt; und
das Ermitteln des Funktionsfähigkeitszustands des Regelventils (36, 44, 52) in Abhängigkeit von dem in dem vorgegebenen Zeitfenster, in dem eingeschwungenen Zustand und/oder bei den im Wesentlichen konstanten Betriebsbedingungen überwachten Stellwert erfolgt.

13. Verfahren nach einem der Ansprüche 10 bis 12, ferner aufweisend:
Erfassen eines Füllgutdurchflusses durch das Regelventil (36, 44, 52) mittels einer Durchflusserfassungseinrichtung (48),
wobei das Ermitteln des Funktionsfähigkeitszustands des Regelventils (36, 44, 52) ferner in Abhängigkeit von dem erfassten Füllgutdurchfluss erfolgt, vorzugsweise durch einen Vergleich zwischen dem erfassten Füllgutdurchfluss und einem theoretischen Füllgutdurchfluss durch das Regelventil (36, 44, 52), der in Abhängigkeit von dem überwachten Stellwert ermittelt wird.

14. Verfahren nach einem der Ansprüche 10 bis 13 oder Vorrichtung (10) nach einem der Ansprüche 1 bis 9 oder, wobei:
die Vorrichtung (10) einen, vorzugsweise ringförmigen, Füllgutkessel (34) aufweist und das Regelventil (36) stromaufwärts von dem Füllgutkessel (34) zum Regeln eines Füllstands oder eines Drucks in dem Füllgutkessel (34) angeordnet ist; oder
das Regelventil (44) ein Füllventil, mit dem das Füllgut zu einem Behälter (12) zum Füllen des Behälters (12) abgebbar ist, zum Regeln des Durchflusses des Füllguts ist; oder
das Regelventil (52) mit einem Füllventil (50), mit dem das Füllgut zu einem Behälter (12) zum Füllen des Behälters (12) abgebbar ist, zum Regeln des Durchflusses des Füllguts verbunden ist.

15. Verfahren nach einem der Ansprüche 10 bis 14 oder Vorrichtung (10) nach einem der Ansprüche 1 bis 9 oder 14, wobei:
die Vorrichtung (10) mindestens eine Füllstation (38) zum Füllen der Behälter (12) aufweist und das Regelventil (36, 44, 52) in der mindestens einen Füllstation (38) umfasst ist oder mit der mindestens einen Füllstation (38) verbunden ist; oder
die Vorrichtung (10) einen Rundläufer-Füller (28) aufweist, der das Regelventil (36, 44, 52) aufweist.
